# EUROPEAN PATENT SPECIFICATION

(11) **EP 3 077 632 B1**
(45) Date of publication and mention of the grant of the patent: **03.08.2022**
(21) Application number: 14805589.0
(22) Date of filing: 28.11.2014
(51) Int. Cl.: F01K 23/10

(54) **COMBINED CYCLE SYSTEM**
KOMBIKRAFTWERKSYSTEM
SYSTÈME À CYCLE COMBINÉ

(30) Priority: 02.12.2013 EP 13195234
(43) Date of publication of application: 12.10.2016
(73) Proprietor: General Electric Technology GmbH, 5400 Baden (CH)
(72) Inventor: OLIA, Hamid, CH-8008 Zürich (CH); KOLLER, Petrus, CH-5000 Aarau (CH); BREITFELD, Michael, CH-8134 Adliswil (CH); ZINNIKER, Rudolf, CH-8055 Zürich (CH)
(74) Representative: Novagraaf Group
(86) International application number: PCT/EP2014/076025
(87) International publication number: WO 2015/082364

(56) References cited:
- US-A- 5 628 179
- US-B1- 6 263 662

## Description

### Technical Field

The present invention relates to combined cycle system, in particular, to the steam temperature control in the heat recovery steam generator of the combined cycle system.

### Background of the Invention

Power plant concepts, in which gas turbine sets having downstream heat recovery steam generators and water/steam cycles having fired boilers and corresponding steam turbines are combined with one another, have been known for some time from the prior art and are used increasingly, above all because of the increased overall efficiency, the additional power output (gas turbine set), along with low investment, and operating flexibility.

A variant of such combined power plant concepts is the combined-cycle power plant, in which the gas turbine set and the water/steam cycle are coupled to one another on the water/steam side. The flue gas discharged by the gas turbine set is conducted through a heat recovery steam generator for the generation of steam and is then discharged into the surroundings. The steam generated in the heat recovery steam generator is fed, for example as live steam and/or re-heater steam, into the water/steam cycle at suitable points. Additionally or alternatively, the heat recovery steam generator may also be employed for condensate and/or feedwater preheating. Various types of combined-cycle power plants with different connections between the gas turbine system and the water/steam system are described, for example, in the article by G Bauer et al., "Das Verbundkraftwerkeine neue Variante des kombinierten Kraftwerkes", ["The combined-cycle power plant-a new variant of the combined power plant"], VGB Krattwerkstechnik 73 (1993), No. 2, page 120 ff.

A typical heat recovery steam generator includes an inlet for receiving the exhaust gases from the gas turbine and an outlet which exhausts the gases received from the gas turbine after heat energy has been extracted from the exhaust gases. Between the inlet and outlet is a flow path, in which multiple heat exchanger devices are located. The heat exchanger devices extract heat from the exhaust gas from the gas turbine as it travels from the inlet to the outlet.

The heat exchanger devices within a heat recovery steam generator are organized in a particular pattern or order within the flow path between the inlet and the outlet. Typically, the heat exchanger devices include a low pressure evaporator, an intermediate pressure evaporator, and a high pressure evaporator. The heat recovery steam generator may also include one or more economizers which preheat water before the water is delivered into one of the evaporators. Further, the heat recovery steam generator can include one or more super-heaters which further heat steam produced by one of the evaporators. Finally, a variety of additional heat exchange elements, such as re-heaters, can also be included at various locations along the flow path for various purposes.

Steam temperature must be controlled according to steam turbine requirement(set values) for transient operations such as start-up, shut down and plant loading and de-loading. In the past, due to low gas turbine exhaust temperature and less plant flexiblility requirements(less plant cycling and long start up time requirement), it was sufficient to control the steam temperature by means of exit-stage de-super-heater. With increase gas turbine exhaust temperature and plant flexibility increase, introduction additional de-super-heater upstream final super-heater became mandatory. This had impact on plant cost, still leaving problems with exit-stage de-super-heater unsolved: minimum flow requirement, erosion of the valve and controllability.

Exit-stage de-super-heater must operate always with minimum flow to ensure small temperature difference across the valve. In some operation regimes, such as Base Load(BL) at low ambient temperature and Low Load operation(LLO), no de-superheating flow is required due to low gas turbine exhaust temperature. Minimum flow causes unnecessary temperature reduction which causes performance reduction(Base Load) or thermal stress on steam turbine(Low Load operation). For exit-stage de-super-heater, water is extracted from high pressure economizer, which cause high pressure upstream of de-super-heater valve, especially during start up, shut down and LLO. This causes erosion of the valve. During plant transient(e.g. start up), the minimum flow causes an unnecessary reduction of the temperature reduction. Exit-stage de-super-heater controls the temperature at HRSG outlet, leaving out the temperature control of components with thick wall such as final super heater inlet/outlet heater and manifolds. The problem with minimum flow amount and erosion of the valves is solved with dual spray de-super-heater valve. One for large flow demand and the other for small flow demand. This solution increases the cost and the minimum flow remains still too high regarding the impact on the steam temperature. In most cases, erosion on small valve has been detected. A cascaded de-super-heater station, one upstream final super-heater and the other downstream final super-heater solves life time problems of components with thick walls, but increases the plant costs.

A heat recovery steam generator uses heat energy extracted from the exhaust gas of a gas turbine to produce steam is disclosed in EP2584157A1. The steam is provided to steam turbines of a combined cycle power plant. Intermediate pressure steam generated by an intermediate pressure evaporator is routed to first and second intermediate pressure super-heaters. Also, steam exhausted from a high pressure steam turbine of a combined cycle power plant is reheated by first and second re-heaters within the heat recovery steam generator. The steam output by the intermediate pressure super-heaters is provided to an inter-stage admission port of an intermediate pressure steam turbine, and steam output by the first and second re-heaters is provided as the main input steam for the intermediate pressure steam turbine of the combined cycle power plant.

A combined cycle system is disclosed in EP 0736669 A2 (see also US 5628179), which includes a gas turbine, a steam turbine and a heat recovery steam generator (HRSG), wherein gas turbine exhaust gas is used in the heat recovery steam generator for heating steam for the steam turbine, the gas turbine exhaust gas flowing from an entry end to an exit end of the HRSG, and wherein the HRSG includes at least one high pressure evaporator arranged to supply steam to a super-heater including multiple passes including a first pass at one end thereof adjacent the evaporator, and a final pass adjacent an opposite end thereof and adjacent the entry end of the heat recovery steam generator, and one or more intermediate passes between the first and final passes, the improvement comprising an attemperating conduit not exposed to the gas turbine exhaust gas, connecting the one end and the opposite end of the super-heater, bypassing the intermediate passes to thereby introduce cooler superheated steam from the one end into the super-heater at the opposite end.

A combined cycle power plant is disclosed in US6263662B1 as well as in US6578352B2, which includes a gas turbine plant, a heat recovery steam generator, and a steam turbine plant. The heat recovery steam generator includes a main stream side steam piping, a bypass side steam piping, a steam branching to branch a steam flowing from a former stage in the heat recovery steam generator into two steams, one as a main stream side steam and another as a de-superheating steam, and a steam merging portion to merge the main stream side steam superheated by the high pressure super-heater and the de-superheating steam passed through the bypass side steam piping. The heat recovery steam generator is provided with a blocking prevention function to prevent blocking of the main stream side steam piping and the bypass side steam piping and a thermal stress generation protection function.

### Summary of the Invention

It is an object of the present invention is to provide a steam temperature control arrangement for combined cycle system which may at least alleviate the problems as mentioned above.

This object is obtained by a combined cycle system according to claim 1.

According to one embodiment of the present invention, the set of super-heaters comprise a first super-heater, a second super-heater and a third super-heater which is arranged along the flow path, with the first super-heater being arranged upstream of the second and third super-heater, the system further comprises a high pressure cooling line connected between an exit end of the high pressure economizer and an entry end of the first super-heater, with a high pressure inter-stage de-super-heater disposed therein to introduce a portion of water that is discharged from the high pressure economizer into the steam that is input into the first super-heater.

According to one embodiment of the present invention, the set of super-heaters comprise a first super-heater, a second super-heater and a third super-heater which are arranged along the flow path, with the first super-heater being arranged upstream of the second and third super-heaters, the system further comprises a high pressure cooling line connected between an exit end of the water separation unit and an entry end of the first super-heater, to introduce a portion of water that is discharged from the water separation unit into tne steam that is input into the first super-heater, and an inter-stage control valve is disposed in the high pressure cooling line.

According to one embodiment of the present invention, the system further comprises a intermediate pressure economizer, a second water separation unit (e.g. an intermediate pressure drum), and a set of re-heaters, and the steam discharged from the second water separation unit is mixed with steam expanded through high pressure part of steam turbine and then routed through an intermediate pressure outlet line to the set of re-heaters and discharged from the set of re-heaters through a secondary outlet line of the heat recovery steam generator to be introduced into the steam turbine, the system further comprises a secondary attemperating line connected between the intermediate pressure outlet line and the secondary outlet line of the heat recovery steam generator to introduce a portion of steam that is discharged from the second water separation unit and high pressure part of steam turbine into the steam discharged from the set of re-heaters, and that a secondary control valve is disposed in the secondary attemperating line.

According to one embodiment of the present invention, the set of re-heaters comprise a first re-heater and a second re-heater disposed downstream of the first re-heater in the flow path, the system further comprises an intermediate pressure cooling line connected between an exit end of the intermediate pressure economizer and an entry end of the first re-heater, with an intermediate pressure inter-stage de-super-heater disposed therein to introduce a portion of water that is discharged from the intermediate pressure economizer into the steam that is input into the first re-heater.

According to the present invention, the attemperating line is connected to the main outlet line of the heat recovery steam generator directly after the water separation unit.

According to one embodiment of the present invention, tne water separation unit is a water separator or a high pressure drum.

Another embodiment of the invention provides a method of operating a combined cycle system according to claim 7.

According to one embodiment of the present invention, the set of super-heaters comprise first, second and third super-heaters arranged along the flow path of the hot flue gases, the first super-heater being arranged upstream of the second and third super-heater, the method additionally comprising the step of introducing a portion of the water discharged from the high pressure economizer into a high pressure cooling line connected between an exit end of the high pressure economizer and an entry end of the first super-heater. The temperature of the superheated steam admitted to the steam turbine can be controlled by controlling the mass flow of saturated steam admixed through the attemperating line.

According to one embodiment of the present invention, tne set ot super-heaters comprise a first super-heater, a second super-heater and a third super-heater which are arranged along the flow path, with the first super-heater being arranged the upstream of the second and third super-heaters, the system further comprises a high pressure cooling line connected between an exit end of the water separation unit and an entry end of the first super-heater, the method additionally comprising introducing a portion of steam that is discharged from the water separation unit into the steam that is input into the first super-heater. Thereby the temperature of the superheated steam discharged from the first super-heater for admission to the high pressure steam turbine can be controlled.

According to one embodiment of the present invention, the system further comprises an intermediate pressure economizer, a second water separation unit (e.g. an intermediate pressure drum), and a set of re-heaters, the method additionally comprising mixing steam discharged from the second water separation unit with steam from the high pressure steam turbine, the steam from the high pressure steam turbine being routed through an intermediate pressure outlet line to the set of re-heaters and discharged from the set of re-heaters through a secondary outlet line of the heat recovery steam generator to be introduced into the intermediate steam turbine, and wherein the system further comprises a secondary attemperating line connected between the intermediate pressure outlet line and the secondary outlet line of the heat recovery steam generator, the method additionally comprising introducing a portion of steam that is discharged from the intermediate pressure outlet line into the steam discharged from the set of re-heaters. Thereby the temperature of the re-heated steam for admission to the medium pressure steam turbine can be controlled.

According to one embodiment of the present invention, the set of re-heaters comprises a first re-heater and a second re-heater disposed downstream of the first re-heater in the flow path, the system further comprises an intermediate pressure cooling line connected between an exit end of the intermediate pressure economizer and an entry end of the first re-heater, with an intermediate pressure inter-stage de-super-heater disposed therein, and the method further comprises introducing a portion of water that is discharged from the intermediate pressure economizer into the steam that is input into the first re-heater. Thereby the temperature of the re-heated steam for admission to the medium pressure steam turbine can be controlled

According to one embodiment of the present invention, the water separation unit is a water separator or a high pressure drum.

With the solution of the present invention, pressure difference across control valve for steam temperature remains low in low load or high load application of the combined cycle system.

### Brief Description of the Drawings

The objects, advantages and other features of the present invention will become more apparent upon reading of the following non-restrictive description of preferred embodiments thereof, given for the purpose of exemplification only, with reference to the accompany drawing, through which similar reference numerals may be used to refer to similar elements, and in which:
- Fig. 1: shows a schematic diagram of a combined cycle system according to one embodiment of the present invention; and
- Fig. 2: shows a schematic diagram of another combined cycle system according to one embodiment of the present invention.

### Detailed Description of Different Embodiments of the Invention

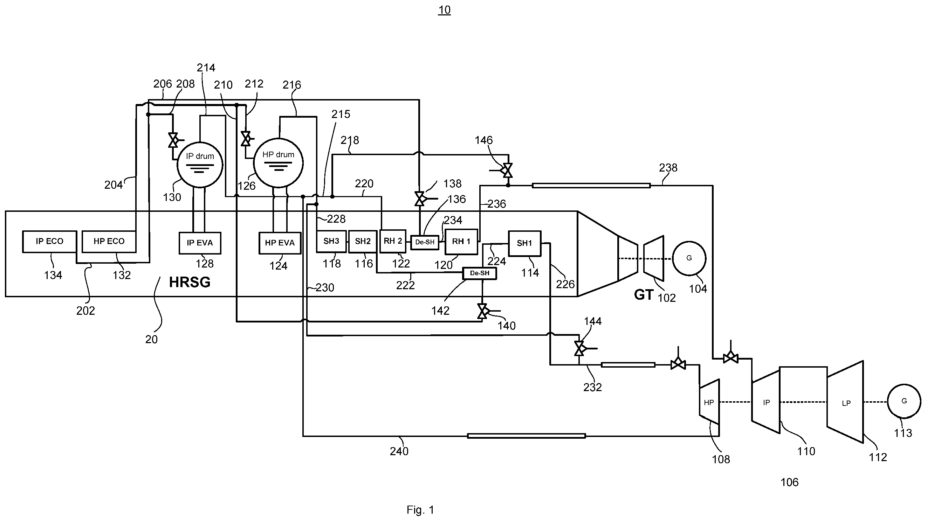

Figure 1 shows a schematic diagram of a combined cycle system 10, which comprises a gas turbine 102, a steam turbine 106 and heat recovery steam generator 20. In one embodiment of the present invention, the gas turbine 102 is connected with a generator 104, and the steam turbine 106 is connected with a generator 113. It should be understood that, in certain applications, the generator 104 and the generator 113 may be integrated into one common generator. The steam turbine 106 consists of a high pressure steam turbine 108, an intermediate pressure steam turbine 110 and a low pressure steam turbine 112. High temperature exhaust gas produced by the gas turbine 102 is guided to the heat recovery steam generator 20. Here, exhaust gas heat feed water(not shown) fed from the steam turbine 106 and after producing the steam in the heat recovery steam generator 20, it is exhausted to the outside through chimney via flue(not shown).

The heat recovery steam generator 20 adopts, as an example, a 3-pressure system of high, intermediate and low pressure. A water separation unit (in this case a high pressure drum 126), an intermediate pressure drum 130 and a low pressure drum (not shown) are installed for one of the three pressure portion, respectively. Instead of one or more of the pressure drums, another water separation unit such as a water separator could also be provided. Further details on water separation units are provided below.

In the heat recovery steam generator 20, a high pressure economizer 132, a high pressure evaporator 124, and a set of super-heaters including a first super-heater 114, a second super-heater 116 and a third super-heater 118 are connected with the high pressure drum 126 by steam lines, which will be explained in detail below. An Intermediate economizer 134, an intermediate evaporator 128, and a set of re-heaters including a first re-heater 120 and a second re-heater 122 are connected with the intermediate pressure drum 130 by steam lines, which will be explained in detail below. In the heat recovery steam generator 20, it is conventionally defined the end proximate to the gas turbine 102 is referred to be the upstream end or entry end, and the end distal to the gas turbine 102 is referred to be the downstream end or exit end. The exhaust gas discharged from the gas turbine passes the heat recovery steam generator 20 along a flow path defined between the upstream/entry end and downstream/exit end. Conventionally, the first super-heater 114 is disposed at the upstream end of the heat recovery steam generator 20. Thus, the steam in the first super-heater 114 is heated to the highest temperature by the exhaust gas. Generally, the first super-heater 114 is referred to be the exit-stage. The second super-heater 116 and the third super-heater 118 are disposed downstream of the first super-heater 114 along the flow path. Similarly, the first re-heater 120 is disposed upstream of the second re-heater 122 in the flow path. It should be understood by those skilled in the art, even though not shown, additional economizer, re-heater may be connected with the low pressure drum. Furthermore, it should be understood that additional super-heaters and re-heaters and other heat exchange devices may be provided in the flow path for other functions facilitating operation of the heat recovery steam generator 20. It should be understood by those skilled in the art, only relevant components that are used to explain the concept of tne present invention are shown in Fig.1 and explained herein. It does not mean the above mentioned components are exclusive. Other components such as condensers and pumps that are necessary to complete the combined cycle system are not shown.

The operation of the heat recovery steam generator 20 according to one embodiment of the present invention is explained in detail below. The water preheated in the high pressure economizer 132 is passed to the high pressure drum 126 through water line 204, where the saturated steam generated by the high pressure evaporator 124 is discharge through steam line 216 into the set of super-heaters, in particular, into the third super-heater 118. Steam line 216 may be defined as the high pressure outlet line for sake of clarification. The steam superheated by the third, second and first super-heater 118, 116 and 114 is discharged through steam line 226 into the high pressure steam turbine 108, where the steam is expanded to drive the generator 113. The steam line 226 may be defined as the main outlet line of the heat recovery steam generator 20 for sake of clarification. To control the temperature of the steam input into the steam turbine 106, relatively cold steam is introduced into the steam line 226. In one embodiment of the present invention, a portion of the steam from the high pressure drum 126 is introduced into the final stage of the heat recovery steam generator 20. As shown in Fig.1, the steam line 216 discharging steam from the high pressure drum 126 is branched to be two steam lines 228 and 230, where steam line 228 is used to pass steam into the set of super-heaters, and the steam line 230 is used to introduce a portion of steam that is discharged from the high pressure drum 126 into the steam discharged from the set of super-heaters 118, 116 and 114. In other words, an attemperating line(steam line 230) is connected between the high pressure outlet line and the main outlet line of the heat recovery steam generator 20 that is discharged from the high pressure drum 126 into the steam discharged from the set of super-heaters. A control valve 144 is disposed in the steam line 230 to adjust the amount of steam that is introduced into the steam line 226 in order to adjust the steam temperature to be input into the high pressure steam turbine 108. As shown in Fig.1, the steam line 230 and the steam line 226 is merged into the steam line 232 which is directed to the high pressure steam turbine 108. This arrangement according to the embodiment of the present invention may be referred to be exit-stage steam spray injection, which may substantially reduce the pressure difference across the control valve 144 compared with traditional water injection.

In another embodiment of the present invention, as shown in Fig.1, a portion of water discharged from the high pressure economizer is introduced into the steam that enters the first super-heater through a de-super-heater in order to further control the steam temperature in the steam cycle. In particular, the water line 204 that exits the high pressure economizer 132 is branched to be two water lines 210 and 212, where the water line 212 is used to pass the water into the high pressure drum 126, the water line 210 is used to introduce a portion of water discharged from the high pressure economizer 132 into the steam line 222 that exits from the second super-heater. Here, the water line 210 may be defined as the high pressure cooling line for sake of clarification. In other words, a high pressure cooling line is connected between an exit end of the high pressure economizer 132 and an entry end of the first super-heater 114. A high pressure inter-stage de-super-heater 142 is disposed in the steam line 222 in order to cool down the steam in the steam line 222, and a control valve 140 is disposed in the water line 210 to adjust the amount of water entering into the steam line 222. As shown in Fig. 1, the water line 210 and the steam line 222 is merged into the steam line 224 which is directed to the first super-heater 114. This arrangement can allow sufficient steam flow through all super-heaters.

As shown in Fig.1, the water preheated in the intermediate pressure economizer 134 is passed to the intermediate pressure drum 130 through water line 202, where the saturated steam generated by the intermediate pressure evaporator 128 is discharge through steam line 214 and after mixing with the expanded steam from steam turbine 108 is discharged through steam line 215 into the set of re-heaters, in particular, into the second re-heater 122. Here the steam line 215 may be defined as the intermediate pressure outlet line for sake of clarification. The steam superheated by the second and first re-heater 122 and 120 is discharged through steam line 236 into the intermediate pressure steam turbine 110, where the steam is expanded to drive the generator 113. Here, the steam line 236 may be defined as the secondary outlet line of the heat recovery steam generator 20 for sake of clarification. To control the temperature of the steam input into the steam turbine 110, relatively cold steam is introduced into the steam line 236. In one example embodiment of the present invention, a portion of the steam from the intermediate pressure drum 130 and expanded steam from steam turbine 108 is introduced into the exit-stage of the heat recovery steam generator 20. As one example, the steam line 214 that exits the intermediate pressure drum 130 is joined with the steam line 240 exits the steam turbine 108 into steam line 215. Steam line 215 is branched to be two steam lines 218 and 220, where the steam line 220 is used to introduce the steam into the set of re-heaters 122 and 120, and the steam line 218 is used to bypass a portion of steam discharged from the intermediate pressure drum 130 and steam tubine 108 into the steam discharged from the first re-heater 120. In other words, a secondary attemperating line(steam line 218) is connected between the intermediate pressure outlet line and the secondary outlet line of the heat recovery steam generator 20 to introduce a portion of steam that is discharged from the intermediate pressure outlet line 215 into the steam discharged from the set of re-heaters120,122. A control valve 146 is disposed in the steam line 218 to adjust the amount of steam input into the steam line 236 so that the temperature of steam in steam line 238 input into the intermediate pressure steam turbine 110 is controlled according to operation requirement.

In another embodiment of the present invention, as shown in Fig.1, a portion of water discharged from the intermediate pressure economizer 134 is introduced into the steam that enters the first re-heater through a de-super-heater 136 in order to further control the steam temperature in the steam cycle. In particular, the water line 202 exits the intermediate pressure economizer 134 is branched to be two water lines 206 and 208, where the water line 208 is used to pass the water into the intermediate pressure drum 130, the water line 206 is used to introduce a portion of water discharged from the intermediate pressure economizer 134 into the steam line 234 that exits from the second re-heater 122. Here, the water line 206 may be defined as the intermediate pressure cooling line tor sake of clarification. In other words, an intermediate pressure cooling line is connected between an exit end of the intermediate pressure economizer 134 and an entry end of the first re-heater 120. A intermediate pressure inter-stage de-super-heater 136 is disposed in the water line 206 in order to produce water to cool down the steam in the steam line 234, and a control valve 138 is disposed in the water line 206 to adjust the amount of water entering into the steam line 234 so that the temperature of steam in steam line 234 input into the first re-heater 120 is controlled according to operation requirement. With the combined inter-stage water spray injection and exit stage steam spray injection, it prevents massive reduction of steam flow through the super-heater for large temperature deviations. It reduces the size of inter-stage water spray injection.

The exit stage steam spray injection has the following advantages:
1) Steam lines can be designed for lower pressure;
2) Pressure across the control valve is much lower than water injection control valve (no erosion of the valve);
3) Minimum flow is much smaller and has less impact on main steam temperature;
4) Increase availability and reliability of temperature control;
5) Main steam temperature can place closer to the de-super heater (main steam line length reduction).

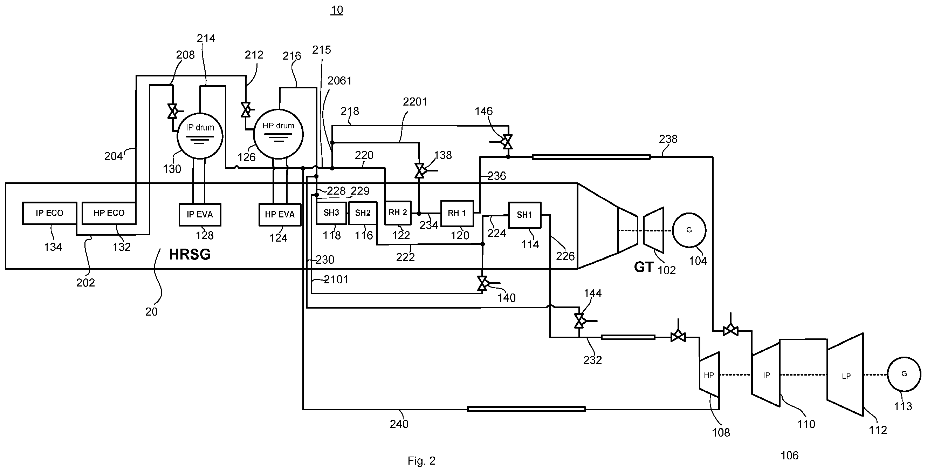

Fig.2 shows a schematic diagram of another embodiment of the combined cycle system according to the present invention. Most of the arrangement as shown in Fig.2 is the same with that of Fig.1 except the inter-stage cooling arrangement as detailed explained below.

Instead of that a portion of water discharged from the high pressure economizer is introduced into the steam that enters the first super-heater through a de-super-heater, a portion of steam discharged from the high pressure drum 126 is introduced into the steam that enters the first super-heater 114. In particular, the steam line 228 enters the third super-heater 118 is branched into two steam lines 229 and 2101, where the steam line 229 is used to pass the steam into the third super-heater 118, and the steam line 2101 is used to pass a portion of steam discharged from the high pressure drum 126 into the first super-heater 114 through the control valve 140. In this case, the high pressure inter-stage de-super-heater is dispensed. Here, the steam line 2101 may be defined also as the high pressure cooling line. In other words, a high pressure cooling line 2101 is connected between an exit end of the high pressure drum 126 and an entry end of the first super-heater 114, to introduce a portion of steam that is discharged from the high pressure drum 126 into the steam that is input into the first super-heater 114. Similarly, instead of that a portion of water discharged from the intermediate pressure economizer 134 is introduced into the steam that enters the first re-heater through a de-super-heater 136, a portion of steam that is discharged from the intermediate pressure drum 130 and expanded steam from steam turbine 108 is introduced into the steam that enters the first re-heater. In particular, the steam line 215 is branched into two steam lines 220 and 2061, where the steam line 220 is used to pass steam into the second re-heater 122, and the steam line 2061 is used to pass a portion of steam that is discharged through steam line 215 into the first re-heater 120 through the control valve 138. In this case, the intermediate pressure inter-stage de-super-heater is dispensed. With this arrangement, steam injection temperature control is achieved in the inter-stage section of the heat recovery steam generator 20. This arrangement reduces the power plant cost at the most.

Although a pressure drums have been described above, any of the pressure drums may be replaced by another water separation unit such as a water separator. A water separator is a mechanical object for collecting water droplets dispersed in a steam flow. It can for example be a separation bottle or steam bottle. Water separation units avoid damage to the turbine that could otherwise be caused by water droplets. In this way, the coldest available steam can be used (e.g. from a heat recovery steam generator with a drum as shown in the Figures, or after a water separator in a once-through heat recovery steam generator) .

### List of Reference Numerals

- 10: combined cycle system
- 20: heat recovery steam generator
- 102: gas turbine
- 104: generator
- 106: steam turbine
- 108: high pressure steam turbine
- 110: intermediate pressure steam turbine
- 112: low pressure steam turbine
- 113: generator
- 114: first super-heater
- 116: second super-heater
- 118: third super-heater
- 120: first re-heater
- 122: second re-heater
- 124: high pressure evaporator
- 126: high pressure drum
- 128: intermediate pressure evaporator
- 130: intermediate pressure drum
- 132: high pressure economizer
- 134: intermediate pressure economizer
- 136: intermediate pressure inter-stage de-super-heater
- 138: control valve
- 140: control valve
- 142: high pressure inter-stage de-super-heater
- 144: control valve
- 146: control valve
- 202: water line
- 204: water line
- 206: water line
- 2061: steam line
- 208: water line
- 210: water line
- 2101: steam line
- 212: water line
- 214: steam line
- 215: Steam line
- 216: steam line
- 218: steam line
- 220: steam line
- 222: steam line
- 224: steam line
- 226: steam line
- 228: steam line
- 230: steam line
- 232: steam line
- 234: steam line
- 236: steam line
- 238: steam line

## Claims

1. A combined cycle system (10), which comprises a gas turbine (102), a steam turbine (106) and a heat recovery steam generator (20), wherein gas turbine exhaust gas flows from an entry end of the heat recovery steam generator to an exit end of the heat recovery steam generator to form a flow path for heating therein steam for the steam turbine, and wherein the heat recovery steam generator comprises a high pressure economizer (132), a water separation unit (126) and a set of super-heaters (114, 116, 118), the steam discharged from the water separation unit is routed through a high pressure outlet line (216) to the set of super-heaters and discharged from the set of super-heaters through a main outlet line (226) of the heat recovery steam generator to be introduced into the steam turbine, wherein an attemperating line (230) is connected between the high pressure outlet line (216) and the main outlet line (226) of the heat recovery steam generator to introduce a portion of saturated steam that is discharged from the water separation unit into the steam discharged from the set of super-heaters, and that a control valve (144) is disposed in the attemperating line; **characterized in that** the attemperating line (230) is connected to the main outlet line (226) of the heat recovery steam generator directly after the water separation unit (126).

2. The combined system according to claim 1, wherein the set of super-heaters comprise a first super-heater (114), a second super-heater (116) and a third super-heater (118) which are arranged along the flow path, with the first super-heater being arranged upstream of the second and third super-heater, the system further comprises a high pressure cooling line connected between an exit end of the high pressure economizer and an entry end of the first super-heater, with a high pressure inter-stage de-super-heater disposed therein to introduce a portion of water that is discharged from the high pressure economizer into the steam that is input into the first super-heater.

3. The combined system according to claim 1, wherein the set of super-heaters comprise a first super-heater, a second super-heater and a third super-heater which are arranged along the flow path, with the first super-heater being arranged upstream of the second and third super-heaters, the system further comprises a high pressure cooling line (2101) connected between an exit end of the water separation unit and an entry end of the first super-heater, to introduce a portion of steam that is discharged from the water separation unit into the steam that is input into the first super-heater, and an inter-stage control valve is disposed in the high pressure cooling line.

4. The combined system according to and of claim 1 to 3 , wherein the system further comprises a intermediate pressure economizer (134), a second water separation unit, and a set of re-heaters (120, 122), and the steam discharged from the second water separation unit is mixed with the steam from high pressure steam turbine routed through an intermediate pressure outlet line to the set of re-heaters and discharged from the set of re-heaters through a secondary outlet line of the heat recovery steam generator to be introduced into the intermediate steam turbine, the system further comprises a secondary attemperating line (218) connected between the intermediate pressure outlet line and the secondary outlet line of the heat recovery steam generator to introduce a portion of steam that is discharged from the intermediate pressure outlet line into the steam discharged from the set of re-heaters, and that a secondary control valve (146) is disposed in the secondary attemperating line.

5. The combined system according to and of claim 1 to 4 , wherein the set of re-heaters comprise a first re-heater (120) and a second re-heater (122) disposed downstream of the first re-heater in the flow path, the system further comprises an intermediate pressure cooling line (206) connected between an exit end of the intermediate pressure economizer and an entry end of the first re-heater, with an intermediate pressure inter-stage de-super-heater (136) disposed therein to introduce a portion of water that is discharged from the intermediate pressure economizer into the steam that is input into the first re-heater.

6. The combined system of any previous claim, wherein the water separation unit is a water separator or a high pressure drum (126).

7. A method of operating a combined cycle system (10) comprising a gas turbine (102), a steam turbine (106) and a heat recovery steam generator (20) comprising a high pressure economizer (132), a water separation unit (126) and a set of super-heaters (114, 116, 118), wherein gas turbine exhaust gas flows from an entry end of the heat recovery steam generator to an exit end of the heat recovery steam generator to form a flow path for heating therein steam for the steam turbine, the method comprising the steps of
- preheating water in the high pressure economizer and passing the water to the water separation unit,
- generating saturated steam in a high pressure evaporator (124) and passing the saturated steam to the water separation unit,
- discharging some of the saturated steam from the water separation unit into the set of super-heaters,
- superheating the saturated steam in the set of super-heaters to create superheated steam, and
- discharging the superheated steam into the steam turbine,
- wherein a portion of the saturated steam that is discharged from the water separation unit is discharged through an attemperating line (230) from the water separation unit into the superheated steam discharged from the set of super-heaters; **characterized in that**
- the attemperating line (230) is connected to a main outlet line of the heat recovery steam generator directly after the water separation unit.

8. The method of claim 7, wherein the set of super-heaters comprise first, second and third super-heaters (114, 116, 118) arranged along the flow path, the first super-heater being arranged upstream of the second and third super-heaters,
the method additionally comprising the step of introducing a portion of the water discharged from the high pressure economizer into a high pressure cooling line connected between an exit end of the high pressure economizer and an entry end of the first super-heater.

9. The method of claim 7, wherein the set of super-heaters comprise a first super-heater (114), a second super-heater (116) and a third super-heater (118) which are arranged along the flow path, with the first super-heater being arranged upstream of the second and third super-heaters, the system further comprises a high pressure cooling line connected between an exit end of the water separation unit and an entry end of the first super-heater, the method additionally comprising introducing a portion of steam that is discharged from the water separation unit into the steam that is input into the first super-heater.

10. The method of any of claims 7 to 9, wherein the system further comprises a intermediate pressure economizer (134), a second water separation unit, and a set of re-heaters (120, 122),
the method additionally comprising mixing steam discharged from the second water separation unit with steam from the high pressure steam turbine, the steam from the high pressure steam turbine being routed through an intermediate pressure outlet line to the set of re-heaters and discharged from the set of re-heaters through a secondary outlet line of the heat recovery steam generator to be introduced into the intermediate steam turbine,
and wherein the system further comprises a secondary attemperating line (218) connected between the intermediate pressure outlet line and the secondary outlet line of the heat recovery steam generator,
the method additionally comprising introducing a portion of steam that is discharged from the intermediate pressure outlet line into the steam discharged from the set of re-heaters.

11. The method of any of claims 7 to 10, wherein the set of re-heaters comprises a first re-heater (120) and a second re-heater (122) disposed downstream of the first re-heater in the flow path, the system further comprises an intermediate pressure cooling line (206) connected between an exit end of the intermediate pressure economizer and an entry end of the first re-heater, with an intermediate pressure inter-stage de-super-heater (136) disposed therein, and the method further comprises introducing a portion of water that is discharged from the intermediate pressure economizer into the steam that is input into the first re-heater.

12. The method of any of claims 7 to 11, wherein the water separation unit is a water separator or a high pressure drum (126).

## Patentansprüche

1. Kombiniertes Kreislaufsystem (10), das eine Gasturbine (102), eine Dampfturbine (106) und einen Wärmerückgewinnungsdampfgenerator (20) umfasst, wobei das Gasturbinenabgas von einem Eintrittsende des Wärmerückgewinnungsdampfgenerators zu einem Austrittsende des Wärmerückgewinnungsdampfgenerators strömt, um einen Strömungsweg zum darin Erwärmen von Dampf für die Dampfturbine zu bilden, und wobei der Wärmerückgewinnungsdampfgenerator einen Hochdruck-Economizer (132), eine Wasserabscheideeinheit (126) und einen Satz Überhitzer (114, 116, 118) umfasst, wobei der aus der Wasserabscheideeinheit abgegebene Dampf durch eine Hochdruckauslassleitung (216) an den Satz Überhitzer geleitet und aus dem Satz Überhitzer durch eine Hauptauslassleitung (226) des Wärmerückgewinnungsdampfgenerators abgegeben wird, um in die Dampfturbine eingeführt zu werden, wobei
eine Vortemperierungsleitung (230) zwischen der Hochdruckauslassleitung (216) und der Hauptauslassleitung (226) des Wärmerückgewinnungsdampfgenerators verbunden ist, um einen Anteil gesättigten Dampf, der aus der Wasserabscheideeinheit abgegeben wird, in den Dampf einzuführen, der aus dem Satz Überhitzer abgegeben wird, und ein Steuerventil (144) in der Vortemperierungsleitung angeordnet ist; **dadurch gekennzeichnet, dass**
die Vortemperierungsleitung (230) mit der Hauptauslassleitung (226) des Wärmerückgewinnungsdampfgenerators direkt nach der Wasserabscheideeinheit (126) verbunden ist.

2. Kombiniertes System nach Anspruch 1, wobei der Satz Überhitzer einen ersten Überhitzer (114), einen zweiten Überhitzer (116) und einen dritten Überhitzer (118) umfasst, die entlang des Strömungswegs angeordnet sind, wobei der erste Überhitzer stromaufwärts des zweiten und dritten Überhitzers angeordnet ist, wobei das System ferner eine Hochdruckkühlleitung umfasst, die zwischen einem Austrittsende des Hochdruck-Economizers und einem Eintrittsende des ersten Überhitzers verbunden ist, wobei ein Hochdruckzwischenkühler darin angeordnet ist, um einen Anteil Wasser, das aus dem Hochdruck-Economizer abgegeben wird, in den Dampf einzuführen, der in den ersten Überhitzer eingeleitet wird.

3. Kombiniertes System nach Anspruch 1, wobei der Satz Überhitzer einen ersten Überhitzer, einen zweiten Überhitzer und einen dritten Überhitzer umfasst, die entlang des Strömungswegs angeordnet sind, wobei der erste Überhitzer stromaufwärts des zweiten und dritten Überhitzers angeordnet ist, wobei das System ferner eine Hochdruckkühlleitung (2101) umfasst, die zwischen einem Austrittsende der Wasserabscheideeinheit und einem Eintrittsende des ersten Überhitzers verbunden ist, um einen Anteil Dampf, der aus der Wasserabscheideeinheit abgegeben wird, in den Dampf einzuführen, der in den ersten Überhitzer eingeleitet wird, und ein Zwischensteuerventil in der Hochdruckkühlleitung angeordnet ist.

4. Kombiniertes System nach und der Ansprüche 1 bis 3, wobei das System ferner einen Zwischendruck-Economizer (134), eine zweite Wasserabscheideeinheit und einen Satz Nacherhitzer (120, 122) umfasst und der aus der zweiten Wasserabscheideeinheit abgegebene Dampf mit dem Dampf aus der Hochdruckdampfturbine gemischt, durch eine Zwischendruckauslassleitung zu dem Satz Nacherhitzer geleitet und aus dem Satz Nacherhitzer durch eine sekundäre Auslassleitung des Wärmerückgewinnungsdampfgenerators abgegeben wird, um in die Zwischendampfturbine eingeführt zu werden, wobei das System ferner eine sekundäre Vortemperierungsleitung (218) umfasst, die zwischen der Zwischendruckauslassleitung und der sekundären Auslassleitung des Wärmerückgewinnungsdampfgenerators verbunden ist, um einen Anteil Dampf, der aus der Zwischendruckauslassleitung abgegeben wird, in den Dampf einzuführen, der aus dem Satz Nacherhitzer abgegeben wird, und ein sekundäres Steuerventil (146) in der sekundären Vortemperierungsleitung angeordnet ist.

5. Kombiniertes System nach und der Ansprüche 1 bis 4, wobei der Satz Nacherhitzer einen ersten Nacherhitzer (120) und einen zweiten Nacherhitzer (122), der stromabwärts des ersten Nacherhitzers in dem Strömungsweg angeordnet ist, umfasst, wobei das System ferner eine Zwischendruckkühlleitung (206) umfasst, die zwischen einem Austrittsende des Zwischendruck-Economizers und einem Eintrittsende des ersten Nacherhitzers verbunden ist, wobei ein Zwischendruckzwischenkühler (136) darin angeordnet ist, um einen Anteil Wasser, das aus dem Zwischendruck-Economizer abgegeben wird, in den Dampf einzuführen, der in den ersten Nacherhitzer eingeleitet wird.

6. Kombiniertes System nach einem der vorstehenden Ansprüche, wobei die Wasserabscheideeinheit ein Wasserabscheider oder eine Hochdrucktrommel (126) ist.

7. Verfahren zum Betreiben eines kombinierten Kreislaufsystems (10), das eine Gasturbine (102), eine Dampfturbine (106) und einen Wärmerückgewinnungsdampfgenerator (20) umfasst, der einen Hochdruck-Economizer (132), eine Wasserabscheideeinheit (126) und einen Satz Überhitzer (114, 116, 118) umfasst, wobei das Gasturbinenabgas von einem Eintrittsende des Wärmerückgewinnungsdampfgenerators zu einem Austrittsende des Wärmerückgewinnungsdampfgenerators strömt, um einen Strömungsweg zum darin Erwärmen von Dampf für die Dampfturbine zu bilden, wobei das Verfahren die Schritte umfasst
- Vorheizen von Wasser in dem Hochdruck-Economizer und Leiten des Wassers zu der Wasserabscheideeinheit,
- Erzeugen von gesättigtem Dampf in einem Hochdruckverdampfer (124) und Leiten des gesättigten Dampfs zu der Wasserabscheideeinheit,
- Entladen eines Teils des gesättigten Dampfs aus der Wasserabscheideeinheit in den Satz Überhitzer,
- Überhitzen des gesättigten Dampfs in dem Satz Überhitzer, um überhitztem Dampf zu erzeugen, und
- Abgeben des überhitzten Dampfs in die Dampfturbine,
- wobei
ein Anteil des gesättigten Dampfs, der aus der Wasserabscheideeinheit abgegeben wird, durch eine Vortemperierungsleitung (230) aus der Wasserabscheideeinheit in den überhitzten Dampf abgegeben wird, der aus dem Satz Überhitzer abgegeben wird; **dadurch gekennzeichnet, dass**
- die Vortemperierungsleitung (230) mit einer Hauptauslassleitung des Wärmerückgewinnungsdampfgenerators direkt nach der Wasserabscheideeinheit verbunden ist.

8. Verfahren nach Anspruch 7, wobei der Satz Überhitzer einen ersten, zweiten und dritten Überhitzer (114, 116, 118) umfasst, die entlang des Strömungswegs angeordnet sind, wobei der erste Überhitzer stromaufwärts des zweiten und dritten Überhitzers angeordnet ist,
wobei das Verfahren zusätzlich den Schritt des Einführens eines Anteils des Wassers, das aus dem Hochdruck-Economizer abgeleitet wird, in eine Hochdruckkühlleitung, die zwischen einem Austrittsende des Hochdruck-Economizers und einem Eintrittsende des ersten Überhitzers verbunden ist, umfasst.

9. Verfahren nach Anspruch 7, wobei der Satz Überhitzer einen ersten Überhitzer (114), einen zweiten Überhitzer (116) und einen dritten Überhitzer (118) umfasst, die entlang des Strömungswegs angeordnet sind, wobei der erste Überhitzer stromaufwärts des zweiten und dritten Überhitzers angeordnet ist, wobei das System ferner eine Hochdruckkühlleitung umfasst, die zwischen einem Austrittsende der Wasserabscheideeinheit und einem Eintrittsende des ersten Überhitzers verbunden ist,
wobei das Verfahren zusätzlich das Einführen eines Anteils Dampf, der aus der Wasserabscheideeinheit abgegeben wird, in den Dampf, der in den ersten Überhitzer eingeleitet wird, umfasst.

10. Verfahren nach einem der Ansprüche 7 bis 9, wobei das System ferner einen Zwischendruck-Economizer (134), eine zweite Wasserabscheideeinheit und einen Satz Nacherhitzer (120, 122) umfasst,
wobei das Verfahren zusätzlich das Mischen von Dampf, der aus der zweiten Wasserabscheideeinheit abgegeben wird, mit Dampf aus der Hochdruckdampfturbine umfasst, wobei der Dampf aus der Hochdruckdampfturbine durch eine Zwischendruckauslassleitung zu dem Satz Nacherhitzer geleitet und aus dem Satz Nacherhitzer durch eine sekundäre Auslassleitung des Wärmerückgewinnungsdampfgenerators abgegeben wird, um in die Zwischendampfturbine eingeführt zu werden,
und wobei das System ferner eine sekundäre Vortemperierungsleitung (218) umfasst, die zwischen der Zwischendruckauslassleitung und der sekundären Auslassleitung des Wärmerückgewinnungsdampfgenerators verbunden ist,
wobei das Verfahren zusätzlich das Einführen eines Anteils Dampf, der aus der Zwischendruckauslassleitung abgegeben wird, in den Dampf, der aus dem Satz Überhitzer abgegeben wird, umfasst.

11. Verfahren nach einem der Ansprüche 7 bis 10, wobei der Satz Nacherhitzer einen ersten Nacherhitzer (120) und einen zweiten Nacherhitzer (122), der stromabwärts des ersten Nacherhitzers in dem Strömungsweg angeordnet ist, umfasst, wobei das System ferner eine Zwischendruckkühlleitung (206) umfasst, die zwischen einem Austrittsende des Zwischendruck-Economizers und einem Eintrittsende des ersten Nacherhitzers verbunden ist, wobei ein Zwischendruckzwischenkühler (136) darin angeordnet ist, und das Verfahren ferner das Einführen eines Anteils Wasser, das aus dem Zwischendruck-Economizer abgegeben wird, in den Dampf, der in den ersten Nacherhitzer eingeleitet wird, umfasst.

12. Verfahren nach einem der Ansprüche 7 bis 11, wobei die Wasserabscheideeinheit ein Wasserabscheider oder eine Hochdrucktrommel (126) ist.

## Revendications

1. Système de cycle combiné (10), qui comprend une turbine à gaz (102), une turbine à vapeur (106) et un générateur de vapeur à récupération de chaleur (20), dans lequel du gaz d'échappement de turbine à gaz s'écoule à partir d'une extrémité d'arrivée du générateur de vapeur à récupération de chaleur vers une extrémité de départ du générateur de vapeur à récupération de chaleur pour former une voie d'écoulement pour le chauffage à l'intérieur de celle-ci de vapeur pour la turbine à vapeur, et dans lequel le générateur de vapeur à récupération de chaleur comprend un économiseur à haute pression (132), une unité de séparation d'eau (126) et un ensemble d'éléments surchauffants (114, 116, 118), la vapeur évacuée à partir de l'unité de séparation d'eau est acheminée à travers une ligne de sortie à haute pression (216) vers l'ensemble d'éléments surchauffants et évacuée à partir de l'ensemble d'éléments surchauffants à travers une ligne de sortie principale (226) du générateur de vapeur à récupération de chaleur pour être introduite dans la turbine à vapeur, dans lequel
une ligne de désurchauffe (230) est connectée entre la ligne de sortie à haute pression (216) et la ligne de sortie principale (226) du générateur de vapeur à récupération de chaleur pour introduire une partie de vapeur saturée qui est évacuée à partir de l'unité de séparation d'eau dans la vapeur évacuée à partir de l'ensemble d'éléments surchauffants, et qu'une soupape de contrôle (144) est disposée dans la ligne de désurchauffe ; **caractérisé en ce que**
la ligne de désurchauffe (230) est connectée à la ligne de sortie principale (226) du générateur de vapeur à récupération de chaleur directement après l'unité de séparation d'eau (126).

2. Système combiné selon la revendication 1, dans lequel l'ensemble d'éléments surchauffants comprennent un premier élément surchauffant (114), un deuxième élément surchauffant (116) et un troisième élément surchauffant (118) qui sont agencés le long de la voie d'écoulement, avec le premier élément surchauffant étant agencé en amont du deuxième et troisième élément surchauffant, le système comprend en outre une ligne de refroidissement à haute pression connectée entre une extrémité de départ de l'économiseur à haute pression et une extrémité d'arrivée du premier élément surchauffant, avec un élément désurchauffant inter-étage à haute pression disposé à l'intérieur de celui-ci pour introduire une partie d'eau qui est évacuée à partir de l'économiseur à haute pression dans la vapeur qui est entrée dans le premier élément surchauffant.

3. Système combiné selon la revendication 1, dans lequel l'ensemble d'éléments surchauffants comprennent un premier élément surchauffant, un deuxième élément surchauffant et un troisième élément surchauffant qui sont agencés le long de la voie d'écoulement, avec le premier élément surchauffant étant agencé en amont des deuxième et troisième éléments surchauffants, le système comprend en outre une ligne de refroidissement à haute pression (2101) connectée entre une extrémité de départ de l'unité de séparation d'eau et une extrémité d'arrivée du premier élément surchauffant, pour introduire une partie de vapeur qui est évacuée de l'unité de séparation d'eau dans la vapeur qui est entrée dans le premier élément surchauffant, et une soupape de contrôle inter-étage est disposée dans la ligne de refroidissement à haute pression.

4. Système combiné conformément à et selon la revendication 1 à 3, dans lequel le système comprend en outre un économiseur à pression intermédiaire (134), une deuxième unité de séparation d'eau, et un ensemble d'éléments réchauffants (120, 122), et la vapeur évacuée à partir de la deuxième unité de séparation d'eau est mélangée avec la vapeur à partir d'une turbine à vapeur à haute pression acheminée à travers une ligne de sortie à pression intermédiaire vers l'ensemble d'éléments réchauffants et évacuée à partir de l'ensemble d'éléments réchauffants à travers une ligne de sortie secondaire du générateur de vapeur à récupération de chaleur pour être introduite dans la turbine à vapeur intermédiaire, le système comprend en outre une ligne de désurchauffe secondaire (218) connectée entre la ligne de sortie à pression intermédiaire et la ligne de sortie secondaire du générateur de vapeur à récupération de chaleur pour introduire une partie de vapeur qui est évacuée à partir de la ligne de sortie à pression intermédiaire dans la vapeur évacuée à partir de l'ensemble d'éléments réchauffants, et qu'une soupape de contrôle secondaire (146) est disposée dans la ligne de désurchauffe secondaire.

5. Système combiné conformément à et selon la revendication 1 à 4, dans lequel l'ensemble d'éléments réchauffants comprennent un premier élément réchauffant (120) et un deuxième élément réchauffant (122) disposé en aval du premier élément réchauffant dans la voie d'écoulement, le système comprend en outre une ligne de refroidissement à pression intermédiaire (206) connectée entre une extrémité de départ de l'économiseur à pression intermédiaire et une extrémité d'arrivée du premier élément réchauffant, avec un élément désurchauffant inter-étage à pression intermédiaire (136) disposé à l'intérieur de celui-ci pour introduire une partie d'eau qui est évacuée à partir de l'économiseur à pression intermédiaire dans la vapeur qui est entrée dans le premier élément réchauffant.

6. Système combiné selon l'une quelconque revendication précédente, dans lequel l'unité de séparation d'eau est un séparateur d'eau ou un tambour à haute pression (126).

7. Procédé d'actionnement d'un système de cycle combiné (10) comprenant une turbine à gaz (102), une turbine à vapeur (106) et un générateur de vapeur à récupération de chaleur (20) comprenant un économiseur à haute pression (132), une unité de séparation d'eau (126) et un ensemble d'éléments surchauffants (114, 116, 118), dans lequel du gaz d'échappement de turbine à gaz s'écoule à partir d'une extrémité d'arrivée du générateur de vapeur à récupération de chaleur vers une extrémité de départ du générateur de vapeur à récupération de chaleur pour former une voie d'écoulement pour le chauffage à l'intérieur de celle-ci de vapeur pour la turbine à vapeur, le procédé comprenant les étapes consistant à
- préchauffer de l'eau dans l'économiseur à haute pression et faire passer l'eau vers l'unité de séparation d'eau,
- générer de la vapeur saturée dans un évaporateur à haute pression (124) et faire passer la vapeur saturée vers l'unité de séparation d'eau,
- évacuer un peu de la vapeur saturée à partir de l'unité de séparation d'eau dans l'ensemble d'éléments surchauffants,
- surchauffer la vapeur saturée dans l'ensemble d'éléments surchauffants pour créer de la vapeur surchauffée, et
- évacuer la vapeur surchauffée dans la turbine à vapeur,
- dans lequel
une partie de la vapeur saturée qui est évacuée à partir de l'unité de séparation d'eau est évacuée à travers une ligne de désurchauffe (230) à partir de l'unité de séparation d'eau dans la vapeur surchauffée évacuée à partir de l'ensemble d'éléments surchauffants ; **caractérisé en ce que**
- la ligne de désurchauffe (230) est connectée à une ligne de sortie principale du générateur de vapeur à récupération de chaleur directement après l'unité de séparation d'eau.

8. Procédé selon la revendication 7, dans lequel l'ensemble d'éléments surchauffants comprennent des premier, deuxième et troisième éléments surchauffants (114, 116, 118) agencés le long de la voie d'écoulement, le premier élément surchauffant étant agencé en amont des deuxième et troisième éléments surchauffants,
le procédé comprenant en complément l'étape d'introduction d'une partie de l'eau évacuée à partir de l'économiseur à haute pression dans une ligne de refroidissement à haute pression connectée entre une extrémité de départ de l'économiseur à haute pression et une extrémité d'arrivée du premier élément surchauffant.

9. Procédé selon la revendication 7, dans lequel l'ensemble d'éléments surchauffants comprennent un premier élément surchauffant (114), un deuxième élément surchauffant (116) et un troisième élément surchauffant (118) qui sont agencés le long de la voie d'écoulement, avec le premier élément surchauffant étant agencé en amont des deuxième et troisième éléments surchauffants, le système comprend en outre une ligne de refroidissement à haute pression connectée entre une extrémité de départ de l'unité de séparation d'eau et une extrémité d'arrivée du premier élément surchauffant,
le procédé comprenant en complément l'introduction d'une partie de vapeur qui est évacuée à partir de l'unité de séparation d'eau dans la vapeur qui est entrée dans le premier élément surchauffant.

10. Procédé selon l'une quelconque des revendications 7 à 9, dans lequel le système comprend en outre un économiseur à pression intermédiaire (134), une deuxième unité de séparation d'eau, et un ensemble d'éléments réchauffants (120, 122),
le procédé comprenant en complément le mélange de vapeur évacuée à partir de la deuxième unité de séparation d'eau avec de la vapeur à partir de la turbine à vapeur à haute pression, la vapeur à partir de la turbine à vapeur à haute pression étant acheminée à travers une ligne de sortie à pression intermédiaire vers l'ensemble d'éléments réchauffants et évacuée à partir de l'ensemble d'éléments réchauffants à travers une ligne de sortie secondaire du générateur de vapeur à récupération de chaleur pour être introduite dans la turbine à vapeur intermédiaire,
et dans lequel le système comprend en outre une ligne de désurchauffe secondaire (218) connectée entre la ligne de sortie à pression intermédiaire et la ligne de sortie secondaire du générateur de vapeur à récupération de chaleur,
le procédé comprenant en complément l'introduction d'une partie de vapeur qui est évacuée à partir de la ligne de sortie à pression intermédiaire dans la vapeur évacuée à partir de l'ensemble d'éléments réchauffants.

11. Procédé selon l'une quelconque des revendications 7 à 10, dans lequel l'ensemble d'éléments réchauffants comprend un premier élément réchauffant (120) et un deuxième élément réchauffant (122) disposé en aval du premier élément réchauffant dans la voie d'écoulement, le système comprend en outre une ligne de refroidissement à pression intermédiaire (206) connectée entre une extrémité de départ de l'économiseur à pression intermédiaire et une extrémité d'arrivée du premier élément réchauffant, avec un élément désurchauffant inter-étage à pression intermédiaire (136) disposé à l'intérieur de celle-ci, et le procédé comprend en outre l'introduction d'une partie d'eau qui est évacuée à partir de l'économiseur à pression intermédiaire dans la vapeur qui est entrée dans le premier élément réchauffant.

12. Procédé selon l'une quelconque des revendications 7 à 11, dans lequel l'unité de séparation d'eau est un séparateur d'eau ou un tambour à haute pression (126).
